# EUROPEAN PATENT APPLICATION

(11) **EP 1 958 692 A1**
(43) Date of publication of application: **20.08.2008**
(21) Application number: 06798160.5
(22) Date of filing: 14.09.2006
(51) Int. Cl.: B01J 23/89, B01D 53/94

(54) **CATALYST FOR EXHAUST GAS PURIFICATION AND EXHAUST GAS PURIFICATION CATALYST MEMBER**

(30) Priority: 09.12.2005 JP 2005356732
(71) Applicant: Nippon Steel Materials Co., Ltd., Tokyo 101-0021 (JP)
(72) Inventor: HIRANO, Kenji, Chiba 293-8511 (JP); KONYA, Shogo, Chiba 293-8511 (JP); SUGIURA, Tsutomu, Chiba 293-8511 (JP)
(74) Representative: Vossius & Partner
(86) International application number: PCT/JP2006/318659
(87) International publication number: WO 2007/066444

(57) **Abstract**

The present invention provides an exhaust gas purification catalyst and catalyst member superior in exhaust gas purification performance and heat resistance, low in cost, and reducing use of precious metals, that is, an exhaust gas purification catalyst, and a catalyst member using the same, comprising a composite oxide having a substantially perovskite type crystalline structure and expressed by the following formula <1> on which one or more elements selected from at least Pt, Pd, and Rh are carried:

A_{α}B₁₋ₓB'ₓO_{3-δ} <1>

(where, A indicates one element or a combination of two elements selected substantially from Ba and Sr, B indicates one element or a combination of two elements selected substantially from Fe and Co, B' indicates one element or a combination of two or more elements selected substantially from Nb, Ta, and Ti, α is 0.95 to 1.05, x is 0.05 to 0.3, and δ is a value determined so as to satisfy charge neutral conditions).

## Description

### TECHNICAL FIELD

The present invention relates to a catalyst and catalyst member purifying combustion exhaust gas of carbon monoxide (CO), nitrogen oxides (NOₓ), and unburned hydrocarbons (HC).

### BACKGROUND ART

Among the gases exhausted from automobile engines and other internal combustion engines, CO, NOₓ, and HC are included. Catalyst technology for converting these to carbon dioxide (CO₂), nitrogen (N₂), or water (H₂O) so as to reduce the amount of exhaust of CO, NOₓ, and HC is being sought. Such catalyst technology is necessary not only for exhaust gas from internal combustion engines but also for other combustion exhaust gases.

As a three-way catalyst simultaneously purifying automobile exhaust gas of CO, NOₓ, and HC, catalysts combining Pt, Pd, Rh, and other precious metals are being widely used. These precious metals are carried as fine particles on the surface of active alumina (γ-alumina)-based oxide particles. These precious metal-carrying oxide particles are used fixed to the inner walls of monolithic carriers by coating, baking, etc. Such three-way catalysts are useful exhaust gas purification catalysts exhibiting an exhaust gas purification ability from a relatively low temperature. The precious metal fine particles on the surface of the active alumina-based oxide particles and the active alumina-based oxide particles themselves sinter and become coarser at a high temperature of about 850°C or more etc., whereby the specific surface area is reduced, so there is the defect that the exhaust gas purification performance falls along with time. That is, there is the defect that an exhaust gas purification precious metal/active alumina-based oxide three-way catalyst is low in heat resistance temperature. To make up for this defect, the practice has been to estimate the amount of deterioration of the catalyst performance over time and carry a considerably large amount of precious metal on the active alumina-based oxide particles in advance. However, carrying a large amount of an expensive and rare precious metal is not preferable either economically or resource wise. In the above way, in a precious metal/active alumina-based oxide three-way catalyst, improvement of the heat resistance and reduction of the amount of the precious metal carried are the outstanding issues.

The method of adding a suitable amount of ceria to active alumina for the purpose of improving the heat resistance of a precious metal/active alumina-based oxide catalyst is disclosed in, for example, Japanese Patent Publication (A) No. 52-116779 and Japanese Patent Publication (A) No. 54-159391. However, the effect of improvement of the heat resistance is not sufficient. The fact is that the amount of precious metal used has not been reduced (Japanese Patent Publication (A) No. 63-302950).

Further, for the purpose of improving the heat resistance, composite oxide catalysts having a perovskite structure (ABX₃) by combination of a rare earth element superior in heat stability and a transition metal have been studied since the past. For example, it is widely known that La₁₋ₓSrₓCoO₃ is superior in purification of HC and CO, but is poor in NOₓ purification activity. Therefore, to improve the NOₓ purification activity, the method of dissolving a precious metal in a composite oxide having a perovskite structure or adding cerium oxide or another oxide of a rare earth element to carry more of the precious metal is disclosed in for example Japanese Patent Publication (A) No. 50-83295, Japanese Patent Publication (A) No. 50-78567, Japanese Patent Publication (A) No. 58-156349, and Japanese Patent Publication (A) No. 59-162948. However, with this method, the improvement of the catalytic activity and the improvement of the heat resistance are not sufficient (Japanese Patent Publication (A) No. 62-269747).

As a three-way catalyst aimed at improvement of the catalytic activity and heat resistance, there is known a catalyst comprised of a defect type perovskite composite oxide with a specific surface area of 10 m²/g or more in which palladium is contained, wherein 10 to 50% of the palladium is dissolved in the defect type perovskite composite oxide and the balance of palladium is carried in the state of PdO or Pd in the defect type perovskite composite oxide (Japanese Patent Publication (A) No. 62-269747). Note that from the description of the constitution of the invention and the examples in the specification of the invention relating to the catalyst, it is interpreted that in a defect type perovskite composite oxide, a combination of La and Sr is substantially essential as the A site element. Further, a defect type perovskite composite oxide with a specific surface area of 10 m²/g or more is produced by the solution method called the "coprecipitation method". According to the experience of the inventors, such a catalyst initially has a relatively superior NOₓ purification activity, but the heat resistance is not sufficient and holding it at a high temperature causes the defect type perovskite composite oxide to drop in specific surface area and the catalytic activity to fall. Further, for industrial production of a defect type perovskite composite oxide with a specific surface area of 10 m²/g or more, a solution method such as the coprecipitation method is optimum, but the coprecipitation method is troublesome and disadvantageous cost-wise. Furthermore, the defect type perovskite composite oxide includes a considerably large amount of the relatively expensive La (one of the rare earth elements) (8 parts of La to 2 parts of Sr is considered preferable), so the catalyst is disadvantageous cost-wise in this respect as well.

As another three-way catalyst for the purpose of improvement of the heat resistance and the reduction of the amount of precious metals, there is known one combining a perovskite structure composite oxide requiring the inclusion of active alumina, a rare earth oxide, and a rare earth element as an A site component element and a precious metal selected from Pt, Pd, and Rh as a catalyst ingredient (Japanese Patent Publication (A) No. 63-302950). With this catalyst, a relatively expensive rare earth element is being utilized as an essential component element of the perovskite type oxide. There is therefore room for improvement cost-wise. Note that from the description of the examples in the specification of the invention relating to the catalyst, for production of a perovskite structure composite oxide, the troublesome and high cost solution method of dissolving salts containing the component elements in water to obtain an aqueous solution, generating a precipitate, dehydrating and drying it, then firing it is being used. Further, it is described that the firing and baking temperature is 600 to 650°C or, even at the highest, 850°C, and that the specific surface area of the perovskite structure composite oxide at the latter is 10 m²/g. According to the experience of the inventors, there is the problem that the perovskite structure composite oxide produced by such a method tends to easily sinter at a high temperature and easily react with other copresent oxides in a solid phase to change in nature and is low in heat resistance.

As a three-way catalyst aiming at the improvement of the heat resistance and durability, there is known one comprised of a perovskite structure composite oxide comprised of an alkali earth metal oxide, lanthanum oxide,' and cerium oxide carrying a precious metal catalyst ingredient (Japanese Patent Publication (A) No. 63-77543). From the description of the examples in the specification of the invention relating to the catalyst, for the production of a perovskite structure composite oxide, the solution method of dissolving salts containing the component elements in water to obtain an aqueous solution, producing a precipitate, dehydrating and drying it, then firing it is used. The firing and baking temperature is 700°C. Further, there is known a separate catalyst comprised of a composite oxide having heat resistance, a perovskite structure composite oxide requiring inclusion of a rare earth element as an A site component element, and a precious metal in copresence (Japanese Patent Publication (A) No. 1-168343). From the description of the examples in the specification of the invention relating to the catalyst, the solution method is used for the production of a perovskite structure composite oxide. The firing temperature is 800°C, while the typical baking temperature is 600°C. In these catalysts, relatively expensive rare earth elements are utilized as the essential component elements of the perovskite type oxide. At the least, there is room for improvement cost-wise. Further, according to the experience of the inventors, there is the problem that the perovskite structure composite oxide produced by such a method tends to easily sinter at a high temperature and easily react with other copresent oxides in a solid phase to change in nature and is low in heat resistance.

As another three-way catalyst aimed at improvement of the catalytic activity and high temperature durability, there is known a composite oxide having a perovskite type crystalline structure characterized by including as an A site component element at least one element selected from Mg, Ca, Sr, Ba, and Ce and a rare earth element other than Ce and as a B site component element at least one element selected from Cr, Cu, Nb, Mo, Tc, Ru, Rh, Ag, and Pt. In the above range of composition, as a composite oxide particularly preferable from the viewpoints of the catalytic activity, high temperature durability, etc., 16 types not including any precious metal element at all are illustrated in the specification of the invention relating to the catalyst (Japanese Patent Publication (A) No. 3-186346). In the experience of the inventors, such a catalyst is not necessarily high in NOₓ decomposition activity. In particular, the NOₓ decomposition activity in the case where no precious metal element is included at all is considerably lower compared with the level necessary and sufficient as an exhaust gas purification catalyst. Further, in this catalyst, relatively expensive rare earth elements are utilized as essential component elements of the perovskite type oxide, so there is room for improvement cost-wise as well.

As a three-way catalyst aimed at effective action even under exhaust gas conditions greatly deviated from the stoichiometric air-fuel ratio, there is known a catalyst comprised of a perovskite structure composite oxide having an A site component element selected from an [A] element group (La or Ce) and a [B] element group (Ba, Sr, Ca, Mg, Pb, Zn, and Ag) and having a B site component element selected from a [C] element group (Fe, Ni, Cr, Cu, V, Mo, W, Ti, Zr, Nb, Pd, Rh, Ru, or Pt) carried on a solid acid (zeolite, crystalline aluminum silicate phosphate, crystalline aluminum phosphate, crystalline metal aluminum phosphate, alumina, titania, zirconia, silica-alumina, etc.) (Japanese Patent Publication (A) No. 5-76762). Note that from the description of the examples in the specification of the invention relating to the catalyst, it is interpreted that the perovskite structure composite oxide necessarily substantially includes the [A] element group (La or Ce). In the experience of the inventors, such a catalyst does not necessarily have a high NOₓ decomposition activity. Specifically, the NOₓ decomposition activity in the case where no precious metal element is included at all is considerably lower compared with the level necessary and sufficient as an exhaust gas purification catalyst. When utilizing Pd, Rh, Pt, or another precious metal element as the component element of a perovskite structure composite oxide, the NOₓ decomposition activity is improved, but it is necessary to make the content considerably higher to obtain the level necessary and sufficient as an exhaust gas purification catalyst, so this is disadvantageous cost-wise and does not substantially lead to savings in the precious metals. Further, with this catalyst, in a perovskite structure composite oxide, relatively expensive rare earth elements are utilized as substantially essential component elements. On this point as well, there is room for improvement cost-wise.

For the purpose of reducing the amount of platinum group catalytic activity metal carried and the long term maintenance of the catalytic activity, a catalyst characterized by the inclusion of a platinum group element (Pd, Pt, or Rh) and specific rare earth element as component elements of a composite oxide of a perovskite structure is known (Japanese Patent Publication (A) No. 2004-41866, Japanese Patent Publication (A) No. 2004-41867, and Japanese Patent Publication (A) No. 2004-41868). In the experience of the inventors, when utilizing Pd, Rh, Pt, or other precious metal elements as component elements of the perovskite structure composite oxide, the NOₓ decomposition activity is improved compared with the case of not containing any precious metal elements at all, but to obtain the necessary and sufficient level as an exhaust gas purification catalyst, the content has to be made considerably high, so this is disadvantageous cost-wise and does not substantially lead to savings in precious metals. Further, with these catalysts, in a perovskite structure composite oxide, relatively expensive rare earth elements are utilized as essential component elements. In this point as well, there is room for improvement cost-wise.

### DISCLOSURE OF THE INVENTION

As explained above, regarding the catalysts for purifying combustion exhaust gas of CO, NOₓ, and HC, conventional precious metal/active alumina-based oxide catalysts had the problem of insufficient heat resistance and difficulty of reduction of the amount of catalytically active species, that is, precious metal. Even among catalysts utilizing a composite oxide having a perovskite structure which have been studied for the purpose of improvement of this, there are the problems of the catalytic activity being insufficient, the heat resistance being insufficient, the method of production being troublesome and high in cost, and the amount of precious metals not being able to be sufficiently reduced.

Therefore, the inventors, in consideration of the above problems, had as their object the provision of a catalyst and catalyst member, in an exhaust gas purification catalyst combining a composite oxide having a substantially perovskite structure (below, described as a "perovskite type oxide") and a precious metal, not requiring an expensive rare earth element as a perovskite type oxide component element, high in activity as an exhaust gas purification catalyst if carrying precious metal species even in a state where the carrier particles of the perovskite type oxide are relatively large, that is, the specific surface area is small, and, furthermore, effectively acting even if the specific surface area is small, so not requiring production of the perovskite type oxide carrier by the coprecipitation method or other solution method which is troublesome and causes a rise in cost, so thereby, due to these features, are superior in terms of savings of precious metals and high temperature durability.

The present invention has as its gist the following:
(1) An exhaust gas purification catalyst characterized by comprising a composite oxide having a substantially perovskite type crystalline structure and expressed by the following formula <1> on which one or more elements selected from at least Pt, Pd, and Rh are carried:

   A_{α}B₁₋ₓB'ₓO_{3-δ} <1>

   (where, A indicates one element or a combination of two elements selected substantially from Ba and Sr, B indicates one element or a combination of two elements selected substantially from Fe and Co, B' indicates one element or a combination of two or more elements selected substantially from Nb, Ta, and Ti, α is 0.95 to 1.05, x is 0.05 to 0.3, and δ is a value determined so as to satisfy charge neutral conditions).
   In the above, "having a substantially perovskite type crystalline structure" means that all or almost all of the structure is a perovskite type crystalline structure, but the structure is not particularly restricted even if a different crystal phase of a nonperovskite structure is included somewhat due to the effect of impurities etc. so long as there is no adverse effect when utilized as an exhaust gas purification catalyst. Note that specifically, as explained in the examples, the strength of the X-ray diffraction peak of the different crystal phase being 1/10 or less of the strength of the diffraction peak due to the perovskite type crystalline structure appearing near that peak is used to deem that the structure has become a substantially perovskite structure. Further, in the above, the "one element or a combination of two elements selected from the group substantially comprised of Ba and Sr" means that all or almost all of the structure is a combination of elements selected from Ba or Sr and that the inclusion of a fine amount of impurity elements and/or fine amounts of additive elements is not particularly restricted in the range of no detrimental effect when utilized as an exhaust gas purification catalyst. Furthermore, in the above, the "one element or a combination of two elements selected from the group substantially comprised of Fe and Co" means that all or substantially all of the structure is a combination of elements selected from Fe or Co and that the inclusion of a fine amount of impurity elements and/or fine amounts of additive elements is not particularly restricted in the range of no ,detrimental effect when utilized as an exhaust gas purification catalyst. Further, in the above, the "one element or a combination of two or more elements selected from the group substantially comprised of Na, Ta, and Ti" means that all or substantially all of the structure is one element or a combination of two or more elements selected from Nb, Ta, or Ti and the inclusion of a fine amount of impurity elements and/or fine amounts of additive elements is not particularly restricted in the range of no detrimental effect when utilized as an exhaust gas purification catalyst.
(2) An exhaust gas purification catalyst as set forth in (1), wherein the composite oxide has a specific surface area of less than 10 m²/g.
(3) An exhaust gas purification catalyst member as set forth in (1) or (2), further including a binder.
(4) An exhaust gas purification catalyst as set forth in (3), wherein the binder is one or both of an oxide or hydroxide at which no platinum group elements are carried.
(5) An exhaust gas purification catalyst member wherein substrate carries an exhaust gas purification catalyst as set forth in any one of (1) to (4).
(6) An exhaust gas purification catalyst member as set forth in (5), wherein the substrate is a ceramic or metal carrier.
(7) An exhaust gas purification catalyst member as set forth in (6), wherein the ceramic or metal carrier has a honeycomb shape.

The exhaust gas purification catalyst and exhaust gas purification catalyst member of the present invention are superior in performance in purifying exhaust gas of CO, NOₓ, and HC and high in heat resistance (high temperature durability). Furthermore, the exhaust gas purification catalyst and exhaust gas purification catalyst member of the present invention do not require any rare earth elements, so save on precious metals and can be produced at a low cost. Therefore, the exhaust gas purification catalyst and exhaust gas purification catalyst member of the present invention is used for purification of exhaust gas including CO, HC, and NOₓ of an internal combustion engine of an automobile etc.

### BEST MODE FOR CARRYING OUT THE INVENTION

Next, the present invention will be explained in detail.

In the catalyst of the present invention, the first important point is that if making the composition of a composite oxide having a substantially perovskite type crystalline structure (below, called a "perovskite type oxide") a specific range so as to make the perovskite type oxide carry one or more elements selected from at least Pt, Pd, and Rh to obtain an exhaust gas purification catalyst, a high catalytic activity is obtained; the second important point is that in particles of the perovskite type oxide of the specific range of composition in the present invention (below, called "the perovskite type oxide of the present invention"), even if the specific surface area is made smaller, a high catalytic activity is obtained when combined with Pt, Pd, Rh, etc.;,the third important point is that due to the small specific surface area, the heat resistance is superior, that is, both a high catalytic activity and heat resistance can be achieved; the fourth important point is that due to the small specific surface area, there is no need for production by the solution method and the cost is low; and the fifth important point is that it is possible to obtain a perovskite type oxide having the above features without utilizing relatively expensive rare earth elements and the cost is low.

First, the first and fifth important points in the catalyst of the present invention will be explained.

The exhaust gas purification catalyst described in (1) of the present invention is characterized by comprising a composite oxide having a substantially perovskite type crystalline structure and expressed by A_{α}B₁₋ₓB'ₓO_{3-δ} (where, A indicates one element or a combination of two elements selected substantially from Ba and Sr, B indicates one element or a combination of two elements selected substantially from Fe and Co, B' indicates one element or a combination of two or more elements selected substantially from Nb, Ta, and Ti, α is 0.95 to 1.05, x is 0.05 to 0.3, and δ is a value determined so as to satisfy charge neutral conditions, that is, is a value determined so that the sum of the valences of the positive ions (A, B, B') becomes equal to the valence of the negative ions (0)) on which one or more elements selected from at least Pt, Pd, and Rh are carried. The composite oxide having this substantially perovskite type crystalline structure (below, called "the perovskite type oxide of the present invention") realizes a crystalline structure deemed a particularly stable cubic crystal crystalline structure or substantially cubic crystal crystalline structure even among perovskite type crystalline structures and does not change in crystalline structure from ordinary temperature to at least a high temperature of over 1200°C. Note that this is one of the factors why the catalyst of the present invention is superior in heat resistance.

When using the A element (Ba, Sr) and B element (Fe, Co) as the oxide component element as in the perovskite type oxide of the present invention, with this alone, a perovskite type crystalline structure cannot be obtained. Therefore, in the prior art, part of the A element has been replaced by rare earth elements. This has become one factor raising costs. As opposed to this, in the present invention, as the B' element, one or more of Nb, Ta, and Ti are added. These elements have special action facilitating formation of a cubic crystal perovskite type crystalline structure. Therefore, there is no need at all to utilize rare earth elements as component elements of the perovskite type oxide. The optimal range of content of the B' element is, if expressed by x in the above formula <1>, 0.05 to 0.3. If x is less than 0.05, a cubic crystal or substantially cubic crystal perovskite type crystalline structure cannot be obtained. Further, if x is over 0.3, oxides other than the perovskite type crystalline structure are produced to a significant extent and sometimes have a detrimental effect on the catalyst performance.

When one or more elements selected from Pt, Pd, and Rh are carried and the crystalline structure of the perovskite type oxide is maintained, the Fe or Co as the B element in the perovskite type oxide of the present invention has an action of exhibiting exhaust gas purification ability as a catalyst. The optimal range of content is related to the content of the B' element. If expressed by 1-x in the above formula <1>, it is 0.7 to 0.95. If less than 0.7, oxides other than the perovskite type crystalline structure are produced to a significant extent and sometimes have a detrimental effect on the catalyst performance. Further, if over 0.95, a cubic crystal or substantially cubic crystal perovskite type crystalline structure cannot be obtained. In the present invention, Fe and Co may also be used mixed, but the ratio is not particularly limited. Note that compared with Fe, in the case of Co, the catalyst of the present invention tends to be somewhat improved in exhaust gas purification performance, but the price becomes slightly high.

The Ba or Sr as the A element in the perovskite type oxide of the present invention is an essential element for the perovskite type oxide of the present invention to become a crystalline structure. With other alkali earth elements, sometimes a perovskite type oxide cannot be obtained due to the relationship with the selection of the B element and B' element. The optimum range of the A element, if expressed by α in the above formula <1>, is 0.95 to 1.05. If outside this range, oxides other than the perovskite type crystalline structure are produced to a significant extent and sometimes have a detrimental effect on the catalyst performance. In the present invention, it is also possible to use Ba or Sr mixed, but the ratio is not particularly limited. Note that compared with Sr, in the case of Ba, the catalyst of the present invention is sometimes improved somewhat in exhaust gas purification performance. Further, the sintering temperature of the oxide particles when producing the perovskite type oxide of the present invention from a material such as barium carbonate sometimes falls.

The perovskite type oxide of the present invention exhibits a superior performance as an exhaust gas purification catalyst as illustrated in the later explained examples first when one or more element selected from at least Pt, Pd, and Rh is carried. With the perovskite type oxide of the present invention alone, as illustrated in the comparative examples of the EXAMPLES, the performance as an exhaust gas purification catalyst is low. Further, as illustrated in the comparative examples of the EXAMPLES, when the precious metal elements are utilized as component elements of the perovskite type oxide, the catalytic activity is inferior even if the rest of the composition of the component elements of the perovskite type oxide (in the above formula <1>, the groups of elements indicated as the A element, B element, and B' element) are the same. Therefore, in the catalyst of the present invention, it is necessary that one or more elements selected from at least Pt, Pd, and Rh be carried. The carried precious metal elements are present on the surface of the perovskite type oxide of the present invention as fine particles of metal or oxide in the state of use as a catalyst and do not form component elements of the perovskite type oxide of the present invention. In other words, in the catalyst of the present invention, by setting this state, the catalytic activity becomes higher and therefore the amount of precious metal can be reduced.

In the catalyst of the present invention, the precious metal element (fine particles) is not particularly defined in particle size and carrying rate. Note that the smaller the particle size or the larger the carrying rate, the more improved the catalytic activity tends to become. The particle size and carrying rate are selected to satisfy the performance requirements of an exhaust gas purification catalyst.

In the catalyst of the present invention, further, the method of carrying the precious metal element is not particularly defined. The usual method may be used for the method of carrying the precious metal element. For example, the catalyst may be produced by impregnating an aqueous solution or organic solvent solution of a nitrate, chloride, ammine complex salt, etc. of the precious metal elements in the perovskite type oxide of the present invention, then drying the oxide by a vacuum evaporator etc., then heat treating it at a high temperature of 600 to 850°C or higher, that is, by the so-called "impregnation method". Alternatively, it may be produced by dipping the perovskite type oxide of the present invention in a solution of a reducing agent acting upon heating and salts of the precious metal elements and heating the solution to make the precious metals precipitate on the perovskite type oxide by reduction, that is, by the so-called "solvothermal method". Alternatively, it is possible to produce the catalyst by dipping the perovskite type oxide of the present invention in a solution of salts of the precious metal elements and adding a reducing agent solution dropwise so as to cause the precious metals to precipitate by reduction on the perovskite type oxide by the so-called "reduction precipitation method".

Next, the second and third important points in the catalyst of the present invention will be explained.

In the particles of the perovskite type oxide of the present invention, as will be illustrated in the later examples, even if the specific surface area is a small one of less than 10 m²/g, if carrying one or more elements selected from Pt, Pd, and Rh to produce the catalyst of the present invention, superior performance as an exhaust gas purification catalyst is exhibited. In other words, in the catalyst of the present invention, the perovskite type oxide particles of the present invention are given a specific surface area of less than 10 m²/g to improve the heat resistance and, simultaneously, to enable superior activity as an exhaust gas purification catalyst to be maintained. The mechanism of this action is unclear, but it is guessed that this is related to the fact that the composition of the perovskite type oxide defined in the present invention and its crystalline structure forms a cubic crystal crystalline structure or what is deemed to be a.substantially cubic crystal crystalline structure. In the present invention, the perovskite type oxide of the present invention is preferably given a specific surface area of less than 10 m²/g. If the specific surface area is 10 m²/g or more, the heat resistance is liable to become poor. Furthermore, to further improve the heat resistance, as illustrated in the examples, it is more preferable to make the specific surface area 6 m²/g or less and, furthermore, to improve the heat resistance even more, it is preferable to make it 4 m²/g or less.

The fourth important point in the catalyst of the present invention will be explained.

In the catalyst of the present invention, the perovskite type oxide of the present invention does not have to be given a large specific surface area. Therefore, as illustrated in the later examples, the catalyst can be produced by the method of pulverizing and mixing the solid material and heating it to a high temperature, that is, the solid phase method. Therefore, it is not necessary at all to utilize the complicated and high cost solution method. In the solid phase method, sometimes a mass-like fired matter is obtained, but in this case, it is sufficient to pulverize this to particles, then use the particles for the catalyst of the present invention. In the present invention, the method of production of a perovskite type oxide is not particularly limited.

Furthermore, in the catalyst of the present invention, a binder is preferably included in addition to the catalyst of the present invention using the above-mentioned perovskite type oxide. This binder binds the particles of the catalyst of the present invention with each other and particles of any auxiliary catalyst other than the catalyst of the present invention which are copresent. In addition, this binder has the function of giving a high bondability when carrying the catalyst of the present invention on the substrate. Due to this, on the various types of substrates explained later, strong bonds are given between particles and, simultaneously, a high bondability to the substrate is realized.

Further, in the catalyst of the present invention, in addition to the catalyst of the present invention using the above-mentioned perovskite type oxide, as a binder, one or both of an oxide or hydroxide on which no platinum group element is carried are preferably copresent. The binder of this oxide or hydroxide, as explained above, binds the catalyst particles etc. together. In addition, it has the function of giving a high bondability when making the catalyst of the present invention be carried on a substrate and is stably present even under high temperature oxidation conditions, so there is little deterioration of performance as a binder. Specifically, alumina, active alumina, boehmite, aluminum hydroxide, silica, silica-alumina, zeolite, or other oxides and hydroxides are suitably utilized. In particular, active alumina is easy to obtain and inexpensive and so is more preferable. These oxides and hydroxides do not need to act as catalysts. Therefore, platinum group elements are not carried. As illustrated in the later explained examples, the perovskite type oxide of the present invention suitably reacts with the oxides and hydroxides and is bonded due to the composition, crystalline structure, and specific surface area, but does not excessively react. Therefore, oxides and hydroxides can be suitably utilized.

Note that in the present invention, there is no restriction on copresence of the catalyst of the present invention with another catalyst or a separately acting substance. The "catalyst other than the present invention" means for example a precious metal/active alumina-based oxide catalyst etc. However, the present invention was made to overcome the defects in precious metal/active alumina-based oxide catalysts. Copresence of a precious metal/active alumina-based oxide catalyst is not a smart move needless to say. Further, the "separately acting substance" is for example cerium oxide or another oxygen absorbing/releasing substance or barium oxide or barium hydroxide or another NOₓ absorbing/releasing substance.

Next, the exhaust gas purification catalyst member of the present invention will be explained.

The exhaust gas purification catalyst member of the present invention is formed by carrying the above catalyst of the present invention on a substrate. By carrying it on a substrate, it is possible to optimally control the spatial concentration of the catalyst and effectively utilize the surface of the catalyst on the contact surface with the exhaust gas. Furthermore, it is possible to prevent splattering of catalyst particles by bonding with the substrate. In addition, the effect is obtained of reduction of the effects of the rise in temperature and heat deterioration accompanying the generation of heat at the time of the catalyst reaction and the drop in temperature and drop in activity accompanying absorption of heat.

As the substrate used for the exhaust gas purification catalyst member of the present invention, a ceramic or metal carrier or a carrier where these are honeycomb shapes can be suitably utilized. As the ceramic, for example, cordierite is suitable, but the present invention is not limited to this. Further, as the metal, for example, a ferrite-based stainless steel superior in oxidation resistance is suitable, but the present invention is not limited to this. When the ceramic or metal carrier is honeycomb shaped, the circulation resistance of the exhaust gas can be reduced. Further, the effective area by which the catalyst of the present invention contacts the exhaust gas increases more, so this is more preferable as an exhaust gas purification catalyst member.

Note that, below, the method of production and method of utilization of the catalyst and catalyst member of the present invention will be explained in detail. Note that the method of production and method of utilization of the catalyst and catalyst member of the present invention are not limited to those illustrated below:

### (Production of Perovskite Type Oxide in Catalyst of Present Invention)

First, the case of production by the solid phase method will be explained.

As the material of the A element, that is, the Ba or Sr, BaCO₃ or SrCO₃ can be suitably used, as the material of the B element, that is, Fe or Co, Fe₂O₃ or Co₃O₄ can be suitably used, and as the material of the B' element, that is, Nb, Ta, or Ti, Nb₂O₅, Ta₂O₅, or TiO₂ can be suitably used. The required amounts of these are weighed, then isopropyl alcohol etc. is used as a dispersion medium for wet mixing by a ball mill or another mill (in some cases, dry mixing not using a dispersion medium is also possible). The obtained slurry is filtered, dried, crushed (in the case of wet drying, usually this step is not required), then placed in an MgO or other ceramic container and fired in the atmosphere for several hours. The firing temperature is 850°C or more, typically is 1000°C or so. If this firing temperature is over 1200°C, the result becomes a dense mass-like fired matter. Pulverization sometimes becomes somewhat difficult. By the above operation, a powder or porous mass fired matter is obtained, so this is pulverized to obtain perovskite type oxide particles.

Next, the case of using the solution method for production will be explained.

As the materials of the A element, B element, and B' element, that is, Ba, Sr, Fe, Co, Nb, Ta, and Ti, ethoxyethylates and other alkoxides of these metals can be utilized. Required amounts of the materials are dissolved in toluene or another organic solvent to obtain a solution. While stirring, pure water and, in some cases, a dilute hydrochloric acid aqueous solution etc. are added dropwise into this solution to cause hydrolysis and form precipitates. After this, the organic solvent and moisture are distilled off under reduced pressure, then the residue is dried, then placed in an MgO or other ceramic container and fired in the atmosphere for several hours. The typical firing temperature is 850°C or more. After this, in the same way as the solid phase method, the result is pulverized to obtain particles of a perovskite type oxide. Note that if the firing temperature is too high, the result becomes an extremely dense mass-like fired matter which is remarkably difficult to pulverize. Conversely, if the firing temperature is low, the heat resistance of the exhaust gas purification catalyst becomes poorer. Therefore, when producing the perovskite type oxide of the present invention by the solution method, precision control of the temperature conditions is necessary, but it is preferable to set the firing temperature high enough to an extent where pulverization is possible.

### <Method of Carrying Pt, Pd, and Rh on Perovskite Type Oxide in Catalyst of Present Invention>

As the material of the Pt, Pd, or Rh, a dinitrodiamine platinum nitric acid aqueous solution, palladium nitrate aqueous solution, or rhodium nitrate aqueous solution can be suitably used. The required amounts of these are weighed to obtain a mixed solution. Furthermore, a predetermined amount of the mixed solution is impregnated in a predetermined amount of a perovskite type oxide which is then dried utilizing a rotary evaporator etc. After this, the result is heat treated at a temperature of about 500°C in the atmosphere for several hours. Furthermore, Ir and other elements can be similarly carried by selecting a suitable compound giving an aqueous solution.

Furthermore, in the catalyst of the present invention, for example active alumina (γ-alumina) can be utilized as the perovskite type oxide and the binder added to this. The particles of the catalyst of the present invention and the active alumina were weighed in predetermined amounts and made to disperse in pure water to obtain a slurry. The moisture was dried off by evaporation, then the result was heat treated at a temperature of about 850°C in the atmosphere for several hours. The result was pulverized in accordance with need. However, when carrying the catalyst of the present invention together with a binder on a ceramic or metal carrier, the drying by evaporation and the steps after this do not necessarily have to be performed.

### <Method of Production and Method of Utilization of Exhaust Gas Purification Catalyst and Catalyst Member of Present Invention>

When using the powder or particles of the catalyst of the present invention as they are, it is sufficient to utilize some sort of mechanism for holding the powder or particles without splattering and circulating the exhaust gas. For example, the method of sandwiching them in a tubular shaped reactor by layers of quartz wool etc. may be mentioned as a specific method.

When using the particles of the catalyst of the present invention together with a binder and utilizing them fixed on the carrier, first a slurry in which the catalyst, binder, etc. are dispersed is prepared and the ceramic or metal carrier is dipped in it. Next, the excess slurry on the carrier surface is removed by blowing it away or another method and the carrier dried, then the entire carrier is heat treated at a temperature of about 850°C in the atmosphere for several hours. Note that in the case of a honeycomb-shaped carrier, the jig fastening the honeycomb-shaped carrier is designed so that the slurry is coated only on the inside walls of the carrier so as to enable to slurry to be sucked up. When the catalyst-carrying carrier is particle shaped, it is sufficient to utilize it packed in a column through which the exhaust gas passes. Further, when the catalyst-carrying carrier is honeycomb shaped, it is sufficient to utilize it fixed or stationary inside the column by some sort of method. For example, by wrapping the outer circumference of the catalyst-carrying honeycomb with heat insulating wool of alumina staple fiber and placing this inside a column, it is possible to fix the honeycomb inside the column. By this, almost all of the exhaust gas is circulated through the catalyst layer for purification.

### EXAMPLES'

Below, examples of the present invention will be explained, but the present invention is not limited to these examples.

For the powder X-ray diffraction method used for analysis of the crystalline structure of the perovskite type oxide in the examples, an RAD-2 made by Rigaku was used, while for the X-ray source, Cu was used. The measurement was conducted by an X-ray tube voltage of 40 kV, a current of 40 mV, a step of 0.02°, and a holding time of 2 seconds. The form of the crystal was confirmed using existing general use data of the ASTM database etc. In X-ray diffraction measurement, when a diffraction peak believed to be due to a weak strength impurity or different crystalline structure was observed, if less than 1/10 of the strength of the adjoining main peak, it was determined to be the structure of the main peak.

Further, for the composition of the perovskite type oxide in each example, the amounts charged at the time of production were used, but separate from this, chemical analysis was used to confirm that the charged amounts of the metal elements in the compound matched those in the product.

The specific surface area of the catalyst in each example was found by the BET method based on the nitrogen gas adsorption using Belsorb made by Bel Japan.

Further, for evaluation of the catalyst performance of the particle-shaped catalyst and catalyst member in each example, the following method was used.

First, the method of evaluation of the exhaust gas purification performance of the catalyst and catalyst member will be explained.

First, the method of evaluation of the catalyst alone (catalyst powder, catalyst particles) will be explained. The evaluation apparatus used here was a circulation type reaction apparatus made of stainless steel pipes. Model gas of the composition of Table 1 was introduced from the inlet side, then this was circulated in the exhaust gas purification reaction part and exhausted to the outlet side. By heating the model gas by an outside heater and sending it to the exhaust gas purification reaction part, the purification reaction part was heated. The temperature at the purification part where the particles containing the catalyst are present was held at 450 to 500°C for 1 hour in an atmosphere of the stoichiometric conditions in Table 1, then cooled once down to near ordinary temperature. Next, the catalyst (including) particles were set in the column of the evaluation apparatus and, while raising them in temperature, the three conditions shown in Table 1 (rich → stoichiometric → lean) were cyclically repeated. The NO decomposition was analyzed under the rich conditions, while the CO and hydrocarbons (below, "HC") were analyzed under stoichiometric conditions when analyzing the gas composition at the outflow side (after passing through the catalyst part). By finding the rates of change of the CO, HC, and NO concentration, the purification characteristics were evaluated. The spatial velocity was made 10,000 hr⁻¹. The measurement was conducted by repeating the cycle of switching the inlet gas composition, then performing the measurement at the point of time when the inlet gas composition can be deemed stable, then changing to a separate inlet gas composition and performing a similar measurement. The evaluation apparatus of the present invention repeatedly operated to perform a measurement after 100 seconds after switching the inlet gas composition and switch to a separate inlet gas composition after 180 seconds.

Next, the method of evaluation of the catalyst performance of the catalyst member comprised of the honeycomb-shaped carrier on which a catalyst is carried will be explained. The honeycomb-shaped carrier on which the catalyst was carried was held in an atmosphere of the stoichiometric conditions of Table 1 at 450 to 500°C for 1 hour, then was cooled once down to near ordinary temperature. Next, the carrier was set in the evaluation apparatus and examined for rates of changes of the concentrations of CO, HC, and NO under a similar procedure and conditions as the above (purification characteristics). The spatial velocity was made 100,000 hr⁻¹. For CO and HC, the decomposition start temperature and decomposition end temperature were found and evaluated. In the "NOₓ decomposition temperature", "D50" is the temperature where 50% of the NOₓ decomposes and D90 is the temperature where 90% of the NOₓ decomposes, that is, the purification rate 50% temperature and 90% temperature. Further, "-" shows that the NOₓ purification rate does not reach 50% to 90%.

Further, the amount of the catalyst used in the evaluation of purification performance of the examples and comparative examples was made 5 to 6 g converted to powder catalyst in the case of each of powder, ceramic balls, and metal honeycombs. The method of setting it in the evaluation apparatus was, in the case of powder and ceramic balls, packing it in the purification reaction part, then lightly packing alumina wool at the inlet side and the outlet side and thereby enabling gas to be circulated without splattering of the catalyst powder and balls. Further, the method of setting a metal honeycomb in the evaluation apparatus was to wrap the outer circumference of the honeycomb by heat insulating wool of alumina staple fiber, set it inside a column, and thereby fix the honeycomb inside the column.

**Table 1**

| Name of condition | Model gas composition before purification (vol%) | | | | | | |
|---|---|---|---|---|---|---|---|
| | N₂ | CO₂ | C₃H₆ | CO | H₂ | O₂ | NO |
| Rich | 82.925 | 13.8 | 0.040 | 2.04 | 0.68 | 0.49 | 0.025 |
| Stoichiometric | 84.985 | 13.8 | 0.040 | 0.49 | 0.17 | 0.49 | 0.025 |
| Lean | 83.975 | 13.8 | 0.040 | 0.49 | 0.17 | 1.50 | 0.025 |

Further, the heat resistance of the catalyst in the examples was evaluated by the following method:

The catalyst member comprised of the honeycomb-shaped carrier on which a catalyst is carried was held in the atmosphere at 850°C for 100 hours, then was cooled once down to near ordinary temperature. This was held in an atmosphere of the stoichiometric conditions of Table 1 at 450 to 500°C for 1 hour, then again cooled down to near ordinary temperature. The thus heat treated member was evaluated by the above method of evaluation and compared in characteristics with a member not heat treated at 850°C for 100 hours. The case of a change of temperature where the NO purification rate becomes 50%, shown in Table 2 as D50 (rise of D50 due to catalyst deterioration), of 20°C or less was evaluated as a very good heat resistance (⊚), of 20 to 50°C as a good heat resistance (○), and over 50°C as a poor heat resistance (×).

### (Example 1)

A perovskite type oxide having a composition of Ba_{0.2}Sr_{0.8}C_{0.9}Nb_{0.1}O_{3-δ} was made to carry Pd to produce a catalyst. This was used to produce a catalyst member. Furthermore, the catalyst performance was evaluated.

Ba_{0.2}Sr_{0.8}Co_{0.9}Nb_{0.1}O_{3-δ} was produced by the following method.

As materials for Ba, Sr, Co, and Nb, particle-shaped BaCO₃, SrCO₃, Co₃O₄, and Nb₂O₅ were used. The materials were weighed to give a molar ratio of Ba:Sr:Co:Nb=0.2:0.8:0.9:0.1, were added to isopropyl alcohol (dispersion medium), and were wet mixed while crushing them by a ball mill to obtain a slurry. From the slurry, a suction filter was used to separate the solid content. This was dried at about 120°C for 1 hour. Next, the obtained dried matter was crushed, then placed in a MgO ceramic container and fired in an electric furnace in the atmosphere at 1050°C for 5 hours to obtain a fired mater of a porous mass. The fired matter was crushed, then dry pulverized by an automatic mortar to obtain an oxide of a Ba_{0.2}Sr_{0.8}Co_{0.9}Nb_{0.1}O_{3-δ} composition. The pulverized oxide had an average particle size of 1.2 µm. Further, this oxide was analyzed for crystalline structure by the powder X-ray diffraction method, whereupon only a clear diffraction pattern exhibiting a cubic perovskite structure was obtained.

Next, the above Ba_{0.2}Sr_{0.8}Co_{0.9}Nb_{0.1}O_{3-δ} was made to carry Pd as shown below.

A predetermined amount of a commercially available palladium nitrate solution was weighed and diluted by pure water to obtain a diluted solution of a volume of about 100 ml. This diluted solution and 100 g of particles of the perovskite type oxide were placed in a rotary evaporator, then first treated to remove the bubbles while agitating them by rotation at ordinary temperature under a reduced pressure. The mixture was returned to ordinary pressure and heated to approximately 60 to 70°C, then was reduced in pressure to dehydrate and dry it. The mixture was cooled to ordinary temperature, then returned to ordinary pressure to take out the solid matter which was then dried at approximately 120°C for 5 hours. The obtained matter was heat treated in the atmosphere at 500°C for 5 hours, then crushed to obtain particles. Due to the above operation, one of the catalysts of the present invention, a Pd-carrying Ba_{0.2}Sr_{0.8}Co_{0.9}Nb_{0.1}O_{3-δ} catalyst with a Pd carrying rate of 0.6 mass% was obtained. Below, this thus produced product will be called a "catalyst powder". Here, the obtained catalyst powder was measured for specific surface area, whereupon it was 2.2 m²/g. Further, this catalyst powder had an average particle size of 1.2 µm.

The obtained Pd-carrying Ba_{0.2}Sr_{0.8}Co_{0.9}Nb_{0.1}O_{3-δ} catalyst powder was used as follows to produce catalyst particles. By mass ratio, the 0.6 mass% Pd-carrying Ba_{0.2}Sr_{0.8}Co_{0.9}Nb_{0.1}O_{3-δ} catalyst powder in 10 parts by mass, commercially available γ-alumina (active alumina) in 5 parts by mass, commercially available silica sol (product name: Snotex C) in 4 parts by mass, and pure water in 10 parts by mass were mixed well while stirring. After this, the mixture was dried at approximately 80°C, then dried at approximately 120°C for 5 hours and the dried matter was crushed. By the above operation, the catalyst particles of the present invention comprised of 0.6 mass% Pd-carrying Ba_{0.2}Sr_{0.8}Co_{0.9}Nb_{0.1}O_{3-δ} catalyst powder and a binder constituted by the oxide present together was obtained. Below, the thus produced matter will be called "catalyst particles". Note that when providing the particles for evaluation of the catalyst performance without forming a coating slurry explained later, the mixture is further heat treated in the atmosphere at 800°C for 1 hour, then pulverized to obtain particles. This particle-shaped catalyst had an average particle size of 16.2 µm.

Next, the catalyst powder obtained by the above was made to be carried on a particle-shaped ceramic carrier and honeycomb-shaped metal carrier.

By mass ratio, the 0.6 mass% Pd-carrying Ba_{0.2}Sr_{0.8}Co_{0.9}Nb_{0.1}O_{3-δ} catalyst powder in 10 parts by mass, commercially available γ-alumina (active alumina) in 5 parts by mass, commercially available silica sol (product name Snotex C) in 4 parts by mass, pure water in 7 parts by mass, a commercially available methyl cellulose solution (solid content 2.5 mass%), and a defoam agent in a suitable quantity were mixed well while stirring to obtain a slurry. Further, as another method, the catalyst particles in 19 parts by mass, pure water in 7 parts by mass, commercially available methyl cellulose solution (solid content 2.5 mass%) in 10 parts by mass, and a defoam agent in a suitable quantity were mixed well while stirring to obtain a slurry.

As the particle-shaped ceramic carrier, commercially available zirconia balls with a diameter of approximately 1 mm were used. A relatively rough weave steel wire cage containing a suitable quantity of the balls was dipped in each slurry while stirring, then lifted up. The cage was sprayed with compressed air while shaking it to blow off the excess slurry and dry it. The operation from the dipping to the drying was repeated three times, then the balls were taken out and dried at approximately 120°C for 5 hour, then were heat treated in the atmosphere at 800°C for 1 hour. Due to the above operation, zirconia balls on which one of the catalysts of the present invention member, that is, 0.6 mass% Pd-carrying Ba_{0.2}Sr_{0.8}Co_{0.9}Nb_{0.1}O_{3-δ} catalyst was carried, were obtained. Below, what is produced will be called a catalyst member of a ceramic particle carrier. The amount of the catalyst carried on the zirconia balls was 0.75 g/liter-carrier when deeming the apparent bulk density to be constant before and after carrying the catalyst powder and finding the amount from the change in mass before and after carrying the catalyst powder.

Further, as the honeycomb-shaped metal carrier, a cylindrical stainless steel honeycomb-shaped carrier of a predetermined shape of a diameter of 25 cm, a height of 60 cm, and a size of cell openings in the honeycomb cross-section of 1 mm × 2 mm was used. This honeycomb-shaped carrier was held vertically, an excess amount of the slurry was uniformly built up on the top end face, then the slurry was sucked from the bottom end face of the honeycomb-shaped carrier to coat the inside walls of the honeycomb and remove the excess slurry. When slurry was deposited on the outer surface of the honeycomb-shaped carrier, the deposited slurry was wiped off before drying. While continuing the suction, the top end face of the honeycomb-shaped carrier was blown with air to dry it. The honeycomb-shaped carrier was turned upside down, then the operation of coating slurry on the inside walls of the honeycomb-shaped carrier and drying it was performed again. After this, the carrier was heat treated in the atmosphere at 800°C for 1 hour to obtain a stainless steel honeycomb-shaped carrier on which one of the catalysts of the present invention member, that is, a 0.6 mass% Pd-carrying Ba_{0.2}Sr_{0.8}Co_{0.9}Nb_{0.1}O_{3-δ} catalyst is carried. Note that the amount of Pd fixed on the honeycomb-shaped carrier was 0.79 g/liter-carrier.

The above catalyst powder, catalyst particles, and catalyst member or catalyst-carrying stainless steel honeycomb-shaped carrier carrying ceramic particles carrying the catalyst powder were measured for exhaust gas purification performance, whereupon in each case, CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 2)

A perovskite type oxide having a composition of Ba_{0.7}Sr_{0.3}Fe_{0.9}Nb_{0.1}O_{3-δ} was made to carry 0.6 mass% of Pd and 0.1 mass% of Ag to produce a catalyst powder. Furthermore, this was used to produce a catalyst member which was evaluated for the catalyst performance.

Ba_{0.7}Sr_{0.3}Fe_{0.9}Nb_{0.1}O_{3-δ} was produced by a method similar to Example 1. Here, as the Fe-containing material, Fe₃O₄ was used. The obtained oxide was analyzed for crystalline structure by the powder X-ray diffraction method, whereupon only a clear diffraction pattern showing a cubic perovskite structure was obtained.

Next, the above Ba_{0.7}Sr_{0.3}Fe_{0.9}Nb_{0.1}O_{3-δ} was made to carry Pd and Ag in the same way as in Example 1 to obtain a Ba_{0.7}Sr_{0.3}Fe_{0.9}Nb_{0.1}O_{3-δ} catalyst powder with a Pd carrying rate of 0.6 mass% and an Ag carrying rate of 0.1 mass%. Here, as the Ag-containing reagent, commercially available silver nitrate was used as an aqueous solution. The obtained catalyst was measured for specific surface area, whereupon it was 2.4 m²/g. Further, this catalyst powder had an average particle size of 1.1 µm.

The obtained 0.6 mass% Pd-0.1 mass% Ag-carrying Ba_{0.7}Sr_{0.3}Fe_{0.9}Nb_{0.1}O_{3-δ} catalyst powder was used by a method similar to Example 1 to obtain a stainless steel honeycomb-shaped carrier on which a catalyst is carried. Note that the amounts of Pd and Ag fixed on the honeycomb-shaped carrier were 0.73 and 0.12 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the catalyst performance relating to NOₓ decomposition and heat resistance was shown in Table 2.

### (Example 3)

A perovskite type oxide having a composition of Ba_{0.4}Sr_{0.6}Co_{0.9}Nb_{0.1}O_{3-δ} was made to carry 0.2 mass% of Pt, 0.6 mass% of Pd, and 0.2 mass% of Rh to produce a catalyst. This was used to produce a catalyst member which was evaluated for catalyst performance.

Ba_{0.4}Sr_{0.6}Co_{0.9}Nb_{0.1}O_{3-δ} was produced by a method similar to Example 1. The obtained oxide was analyzed for crystalline structure by the powder X-ray diffraction method, whereby only a clear diffraction pattern showing a cubic perovskite structure was obtained.

Next, the above Ba_{0.4}Sr_{0.6}Co_{0.9}Nb_{0.1}O_{3-δ} was made to carry Pt, Pd, and Rh by a method similar to Example 1 to obtain a Pt-Pd-Rh-carrying Ba_{0.4}Sr_{0.6}Co_{0.9}Nb_{0.1}O_{3-δ} catalyst powder with a Pt carrying rate of 0.2 mass%, a Pd carrying rate of 0.6 mass%, and a Rh carrying rate of 0.2 mass%. Here, as the Pt-containing reagent, commercially available chloroplatinic acid was used as an aqueous solution. Further, as a Rh-containing reagent, commercially available rhodium nitrate was used as an aqueous solution. The obtained catalyst was measured for specific surface area, whereupon it was 2.3 m²/g. Further, this catalyst powder had an average particle size of 1.1 µm.

This catalyst powder was used by a method similar to Example 1 to obtain a stainless steel honeycomb-shaped carrier on which a catalyst is carried. Note that the amounts of Pt, Pd, and Rh fixed on the honeycomb-shaped carrier were 0.26, 0.79, and 0.26 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 4)

A perovskite type oxide having a composition of Ba_{0.4}Sr_{0.65}Co_{0.8}Nb_{0.2}O_{3-δ} was made to carry 0.5 mass% of Rh and 0.5 mass% of Pd to produce a catalyst. Furthermore, this was used to produce a catalyst member which was evaluated for exhaust gas purification performance.

Ba_{0.4}Sr_{0.65}Co_{0.8}Nb_{0.2}O_{3-δ} was produced by a method similar to Example 1. The obtained oxide was analyzed for crystalline structure by the powder X-ray diffraction method, whereupon only a clear diffraction pattern showing a cubic perovskite structure was obtained.

Next, the above Ba_{0.4}Sr_{0.65}Co_{0.8}Nb_{0.2}O_{3-δ} was made to carry Rh and Pd by a method similar to Example 1 to obtain a Rh-Pd-carrying Ba_{0.4}Sr_{0.65}Co_{0.8}Nb_{0.2}O_{3-δ} catalyst powder with an Rh carrying rate of 0.5 mass% and a Pd carrying rate of 0.5 mass%. The obtained catalyst was measured for specific surface area, whereupon it was 3.3 m²/g. Further, this catalyst powder had an average particle size of 1.0 µm.

This catalyst powder was used by a method similar to Example 1 to obtain a stainless steel honeycomb-shaped carrier on which a catalyst is carried. Note that the amounts of Pt and Pd fixed on the honeycomb-shaped carrier were 0.49 and 0.49 g/liter-carrier.

The above catalyst-carrying stainless steel honeycomb-shaped carrier was measured for exhaust gas purification performance, whereupon the CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 5)

A perovskite type oxide having a SrCo_{0.9}Nb_{0.1}O_{3-δ} composition was made to carry 0.6 mass% of Rh and 0.1 mass% of Ag to produce a catalyst. Furthermore, this was used to produce a catalyst member which was evaluated for exhaust gas purification performance.

SrCo_{0.9}Nb_{0.1}O_{3-δ} was produced by a method similar to Example 1. The obtained oxide was analyzed for crystalline structure by the powder X-ray diffraction method, whereupon only a clear diffraction pattern showing a cubic perovskite structure was obtained.

Next, the above SrCo_{0.9}Nb_{0.1}O_{3-δ} was made to carry Rh and Ag by a method similar to Example 1 to obtain an Rh-Ag-carrying SrCo_{0.9}Nb_{0.1}O_{3-δ} catalyst powder with an Rh carrying rate of 0.6 mass% and Ag carrying rate of 0.1 mass%. The obtained catalyst was measured for specific surface area, whereupon it was 3.5 m²/g. Further, this catalyst powder had an average particle size of 1.0 µm.

This catalyst powder was used by a method similar to Example 1 to obtain a stainless steel honeycomb-shaped carrier on which a catalyst is carried. Note that the amounts of Rh and Ag fixed on the honeycomb-shaped carrier were 0.72 and 0.12 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 6)

A perovskite type oxide having a composition of Ba_{0.2}Sr_{0.8}Co_{0.3}Nb_{0.1}O_{3-δ} was made to carry 0.1 mass% of Pd and 0.5 mass% of Rh to produce a catalyst. Furthermore, this was used to produce a catalyst member which was evaluated for exhaust gas purification performance.

Ba_{0.2}Sr_{0.8}Co_{0.3}Fe_{0.6}Nb_{0.1}O_{3-δ} was produced by a method similar to Example 1. Here, as the Fe-containing material, Fe₃O₄ was used, while as the Co-containing material, Co₃O₄ was used. The obtained oxide was analyzed for crystalline structure by the powder X-ray diffraction method, whereupon only a clear diffraction pattern showing a cubic perovskite structure was obtained.

Next, the above Ba_{0.2}Sr_{0.8}Co_{0.3}Fe_{0.6}Nb_{0.1}O_{3-δ} was made to carry Pd and Rh in the same way as in Example 1 to obtain a Pd-Rh-carrying Ba_{0.2}Sr_{0.8}Co_{0.3}Fe_{0.6}Nb_{0.1}O_{3-δ} catalyst powder with a Pd carrying rate of 0.1 mass% and an Rh carrying rate of 0.5 mass%. The obtained catalyst was measured for specific surface area, whereupon it was 2.0 m²/g. Further, this catalyst powder had an average particle size of 1.3 µm.

This catalyst powder was used by a method similar to Example 1 to obtain a stainless steel honeycomb-shaped carrier on which a catalyst is carried. Note that the amounts of Pd and Rh fixed on the honeycomb-shaped carrier were 0.15 and 0.76 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 7)

A perovskite type oxide having a composition of Ba_{0.9}Sr_{0.1}Co_{0.9}Ta_{0.1}O_{3-δ} was made to carry 0.6 mass% of Pd, 0.1 mass% of Rh, and 0.1 mass% of Ru to produce a catalyst. Furthermore, this was used to produce a catalyst member which was evaluated for exhaust gas purification performance.

Ba_{0.9}Sr_{0.1}Co_{0.9}Nb_{0.1}O_{3-δ} was produced by a method similar to Example 1. Here, as the Ta-containing material, Ta₂O₅ was used. The obtained oxide was analyzed for crystalline structure by the powder X-ray diffraction method, whereupon only a clear diffraction pattern showing a cubic perovskite structure was obtained.

Next, the above Ba_{0.9}Sr_{0.1}Co_{0.9}Ta_{0.1}O_{3-δ} was made to carry Pd, Rh, and Ru in the same way as in Example 1 to obtain a Pd-Rh-Ru-carrying Ba_{0.9}Sr_{0.1}Co_{0.9}Ta_{0.1}O_{3-δ}catalyst powder with a Pd carrying rate of 0.6 mass%, a Rh carrying rate of 0.1 mass%, and a Ru carrying rate of 0.1 mass%. Here, as the Ru-containing reagent, a dilute nitric acid aqueous solution of nitrosilyl ruthenium nitrate was used. The obtained catalyst was measured for specific surface area, whereupon it was 3.1 m²/g. Further, this catalyst powder had an average particle size of 1.0 µm.

This catalyst powder was used by a method similar to Example 1 to obtain a stainless steel honeycomb-shaped carrier on which a catalyst is carried. Note that the amounts of Pd, Rh, and Ru fixed on the honeycomb-shaped carrier were 0.92, 0.15, and 0.15 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 8)

A perovskite type oxide having a composition of Ba_{0.34}Sr_{0.7}Co_{0.8}Nb_{0.2}O_{3-δ} was made to carry 0.6 mass% of Pd to produce a catalyst. Furthermore, this was used to produce a catalyst member which was evaluated for exhaust gas purification performance.

Ba_{0.34}Sr_{0.7}Co_{0.8}Ti_{0.2}O_{3-δ} was produced by a method similar to Example 1. Here, as the Ti-containing material, TiO₂ was used. The obtained oxide was analyzed for crystalline structure by the powder X-ray diffraction method, whereupon only a clear diffraction pattern showing a cubic perovskite structure was obtained.

Next, Ba_{0.34}Sr_{0.7}Co_{0.8}Ti_{0.2}O_{3-δ} was made to carry Pd in the same way as in Example 1 to obtain a Bao_{0.34}Sro_{0.7}Co_{0.8}Ti_{0.2}O_{3-δ} catalyst powder with a Pd carrying rate of 0.6 mass%. The obtained catalyst was measured for specific surface area, whereupon it was 2.4 m²/g. Further, this catalyst powder had an average particle size of 1.1 µm.

This catalyst powder was used by a method similar to Example 1 to obtain a stainless steel honeycomb-shaped carrier on which a catalyst is carried. Note that the amount of Pd fixed on the honeycomb-shaped carrier was 0.70 g/liter-carrier.
The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 9)

A perovskite type oxide having a composition of Ba_{0.2}Sr_{0.8}Co_{0.95}Nb_{0.05}0_{3-δ} was made to carry 0.3 mass% of Pd to produce a catalyst. Furthermore, this was used to produce a catalyst member which was evaluated for exhaust gas purification performance.

Ba_{0.2}Sr_{0.8}Co_{0.95}Nb_{0.05}0_{3-δ} was produced by a method similar to Example 1. The obtained oxide was analyzed for crystalline structure by the powder X-ray diffraction method, whereupon only a clear diffraction pattern showing a cubic perovskite structure was obtained.

Next, the above Ba_{0.2}Sr_{0.8}Co_{0.85}Nb_{0.05}0_{3-δ} was made to carry Pd by a method similar to Example 1 to obtain a Pd-carrying Ba_{0.2}Sr_{0.8}Co_{0.95}Nb_{0.05}O_{3-δ} catalyst powder with a Pd carrying rate of 0.3 mass%. The obtained catalyst was measured for specific surface area, whereupon it was 2.1 m²/g. Further, this catalyst powder had an average particle size of 1.3 µm.

This catalyst powder was used by a method similar to Example 1 to obtain a stainless steel honeycomb-shaped carrier on which a catalyst is carried. Note that the amount of Pd fixed on the honeycomb-shaped carrier was 0.50 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 10)

A perovskite type oxide having a composition of Ba_{0.2}Sr_{0.8}Fe_{0.7}Nb_{0.3}O_{3-δ} was made to carry 0.6 mass% of Pd and 0.1 mass% of Ir to produce a catalyst. Furthermore, this was used to produce a catalyst member which was evaluated for exhaust gas purification performance.

Ba_{0.2}Sr_{0.8}Fe_{0.7}Nb_{0.3}O_{3-δ} was produced by a method similar to Examples 1 and 2. The obtained oxide was analyzed for crystalline structure by the powder X-ray diffraction method, whereupon only a clear diffraction pattern showing a cubic perovskite structure was obtained.

Next, the above Ba_{0.2}Sr_{0.8}Fe_{0.7}Nb_{0.3}O_{3-δ} was made to carry Pd and Ir in the same way as Example 1 to obtain a Pd-Ir carrying Ba_{0.2}Sr_{0.8}Fe_{0.7}Nb_{0.3}0_{3-δ} catalyst powder with a Pd carrying rate of 0.6 mass% and an Ir carrying rate of 0.1 mass%. Here, as the Ir-containing reagent, an acetyl acetonate complex solution of iridium was used. The obtained catalyst was measured for specific surface area, whereupon it was 2.4 m²/g. Further, this catalyst powder had an average particle size of 1.2 µm.

This catalyst powder was used by a method similar to Example 1 to obtain a stainless steel honeycomb-shaped carrier on which a catalyst is carried. Note that the amounts of Pd and Ir fixed on the honeycomb-shaped carrier were 0.78 and 0.13 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 11)

A perovskite type oxide having a composition of Ba_{0.2}Sr_{0.8}Co_{0.9}Nb_{0.1}O_{3-δ} was made to carry 0.6 mass% of Pd to produce a catalyst. This was used together with a catalyst comprised of α-alumina particles made to carry 0.1 mass% of Pd to produce a catalyst member. Furthermore, the catalyst performance was evaluated.

Ba_{0.2}Sr_{0.8}Co_{0.9}Nb_{0.1}O_{3-δ} was produced by a method similar to Example 1. The obtained oxide particles were analyzed for crystalline structure by the powder X-ray diffraction method, whereupon only a clear diffraction pattern showing a cubic perovskite structure was obtained.

This Ba_{0.2}Sr_{0.8}Co_{0.9}Nb_{0.1}O_{3-δ} was made to carry Pd in the same way as in Example 1 to obtain Ba_{0.2}Sr_{0.8}Co_{0.9}Nb_{0.1}O_{3-δ} catalyst powder with a Pd carrying rate of 0.6 mass%. The catalyst obtained here was measured for specific surface area, whereupon it was 2.4 m²/g. Further, this catalyst powder had an average particle size of 1.1 µm.

On the other hand, catalyst powder comprised of α-alumina particles carrying 0.1 mass% of Pd was produced by a method similar to the later explained Comparative Example 1.

The prepared Pd-carrying Ba_{0.2}Sr_{0.8}Co_{0.9}Nb_{0.1}O_{3-δ} catalyst and Pd-carrying α-alumina particle catalyst were mixed by a ratio of a mass ratio of 2:1, then a method similar to Example 1 was used to obtain a catalyst-carrying stainless steel honeycomb-shaped carrier on which a Pd-carrying Ba_{0.2}Sr_{0.8}Co_{0.9}Nb_{0.1}O_{3-δ} catalyst powder and a Pd-carrying α-alumina catalyst powder are simultaneously carried. Note that the amount of Pd fixed on the honeycomb-shaped carrier was a total of 0.71 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 12)

A perovskite type oxide having a composition of SrCo_{0.9}Nb_{0.1}O_{3-δ} was made to carry 0.6 mass% of Pd to produce a catalyst. Furthermore, this was used to produce a catalyst member which was evaluated for exhaust gas purification performance.

SrCo_{0.9}Nb_{0.1}O_{3-δ} was produced by the method similar to Example 1. The obtained oxide was analyzed for crystalline structure by the powder X-ray diffraction method, whereupon only a clear diffraction pattern showing a cubic perovskite structure was obtained.

Next, SrCo_{0.9}Nb_{0.1}O_{3-δ} was made to carry Pd by a method similar to Example 1 to obtain a Pd-carrying SrCo_{0.9}Nb_{0.1}O_{3-δ} catalyst powder with a Pd carrying rate of 0.6 mass%. The obtained catalyst was measured for specific surface area, whereupon it was 3.2 m²/g. Further, this catalyst powder had an average particle size of 1.3 µm.

This catalyst powder was used by a method similar to Example 1 to obtain a stainless steel honeycomb-shaped carrier on which a catalyst is carried. Note that the amount of Pd fixed on the honeycomb-shaped carrier was 0.73 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 13)

A perovskite type oxide having a composition of Sr_{0.95}Co_{0.9}Nb_{0.09}Ta_{0.01}O_{3-δ} was made to carry 0.6 mass% of Pd to produce a catalyst. Furthermore, this was used to produce a catalyst member which was evaluated for exhaust gas purification performance.

Sr_{0.95}Co_{0.9}Nb_{0.09}Ta_{0.01}O_{3-δ} was produced by a method similar to Example 1. The obtained oxide was analyzed for crystalline structure by the powder X-ray diffraction method, whereupon only a clear diffraction pattern showing a cubic perovskite structure was obtained.

Next, Sr_{0.95}Co_{0.9}Nb_{0.09}Ta_{0.01}O_{3-δ} was made to carry Pd by a method similar to Example 1 to obtain a Pd-carrying Sr_{0.95}Co_{0.9}Nb_{0.09}Ta_{0.01}O_{3-δ} catalyst powder with a Pd carrying rate of 0.6 mass%. The obtained catalyst was measured for specific surface area, whereupon it was 2.9 m²/g. Further, this catalyst powder had an average particle size of 1.3 µm.

This catalyst powder was used by a method similar to Example 1 to obtain a stainless steel honeycomb-shaped carrier on which a catalyst is carried. Note that the amount of Pd fixed on the honeycomb-shaped carrier was 0.78 g/liter-carrier.

The above catalyst-carrying stainless steel honeycomb-shaped carrier was measured for exhaust gas purification performance, whereupon CO started to decompose at 200°C or more and decomposed 100% at 280°C. Further, HC started to decompose at 250°C or more and decomposed 100% at 300°C. Furthermore, the NOₓ decomposition and heat resistance were evaluated. The results are shown in Table 2.

### (Example 14)

A perovskite type oxide having a composition of SrCo_{0.9}Nb_{0.1}O_{3-δ} produced by a method similar to Example 1 was placed in an ethanol solution then wet crushed by a planetary ball mill for 5 hours, a suction filter was used to separate the solid content which was dried at 120°C for 2 hours. Next, the obtained dried matter was crushed, then dry pulverized by an automatic mortar to obtain an oxide of a composition of SrCo_{0.9}Nb_{0.1}O_{3-δ}. The obtained oxide was analyzed for crystalline structure by the powder X-ray diffraction method, whereupon only a clear diffraction pattern showing a cubic perovskite structure was obtained. This was made to carry Pd by a method similar to Example 1 to obtain a 0.6 mass% Pd-carrying SrCo_{0.9}Nb_{0.1}O_{3-δ} catalyst powder. The obtained catalyst was measured for specific surface area, whereupon it was 5.9 m²/g. Further, this catalyst powder had an average particle size of 1.0 µm.

Next, this catalyst powder was used by a method similar to Example 1 to produce a stainless steel honeycomb-shaped carrier on which a catalyst is carried and which was evaluated for heat resistance. The amount of Pd fixed on the honeycomb-shaped carrier was 0.73 g/liter-carrier.

Compared with the case of Example 12, the initial catalytic activity (D50 and D90 temperatures) was approximately 5°C lower than the NOₓ decomposition temperature or a performance more superior than the catalyst-carrying stainless steel honeycomb-shaped carrier of Example 12. The catalytic activity after the evaluation of the heat resistance was about the same extent as the catalytic activity shown by the catalyst-carrying stainless steel honeycomb-shaped carrier after the heat resistance test of Example 12. The deterioration rate was slightly inferior to that of Example 12, but the range of change of the D50 temperature before and after the heat resistance test was 20°C or less, that is, a superior heat resistance was exhibited.

### (Comparative Example 1)

A catalyst comprised of γ-alumina on which Pd was carried was produced. This was used to produce a catalyst member. Furthermore, the catalyst performance was evaluated.

The γ-alumina used was a commercially available one. This was analyzed for crystalline structure by the powder X-ray diffraction method, whereupon a diffraction pattern showing a cubic perovskite structure was not observed. Only a diffraction pattern distinctive to γ-alumina could be observed.

Next, γ-alumina was made to carry Pd by a method similar to Example 1 to obtain a γ-alumina catalyst powder with a Pd carrying rate of 0.6 mass%. The obtained catalyst was measured for specific surface area, whereupon it was 90.2 m²/g. Further, this catalyst powder had an average particle size of 1.4 µm.

This catalyst powder was used by a method similar to Example 1 to obtain a stainless steel honeycomb-shaped carrier on which a catalyst is carried. However, the conditions for heat treatment in the atmosphere after coating the slurry on the honeycomb-shaped carrier and drying it were 550°C for 1 hour. The rest of the conditions were the same as in Example 1. Note that the amount of Pd fixed on the honeycomb-shaped carrier was 0.82 g/liter-carrier.

The above catalyst-carrying stainless steel honeycomb-shaped carrier was measured for exhaust gas purification performance, whereupon CO started to decompose at 200°C or more and decomposed substantially 100% at 290°C. Further, HC started to decompose at 250°C or more and decomposed 100% at 320°C. Furthermore, the catalyst performance relating to the NOₓ decomposition and heat resistance is shown in Table 2. In the case of this comparative example, the heat resistance was inferior to the catalyst of the examples.

### (Comparative Example 2)

A catalyst comprised of γ-alumina on which Pt was carried was produced. This was used to produce a catalyst member. Furthermore, the catalyst performance was evaluated.

The γ-alumina used was a commercially available one. This was analyzed for crystalline structure by the powder X-ray diffraction method, whereupon a diffraction pattern showing a cubic perovskite structure could not be observed. Only a diffraction pattern distinctive to γ-alumina could be observed.

Next, γ-alumina was made to carry Pb by a method similar to Example 1 to obtain a γ-alumina catalyst powder with a Pt carrying rate of 0.6 mass%. The obtained catalyst obtained here was measured for specific surface area, whereupon it was 93.62 m²/g. Further, this catalyst powder had an average particle size of 1.4 µm.

This catalyst powder was used by a method similar to Example 1 to obtain a stainless steel honeycomb-shaped carrier on which a catalyst is carried. However, the conditions for heat treatment in the atmosphere after coating the slurry on the honeycomb-shaped carrier and drying it were 550°C for 1 hour. The rest of the conditions were the same as in Example 1. Note that the amount of Pd fixed on the honeycomb-shaped carrier was 0.73 g/liter-carrier.

The above catalyst-carrying stainless steel honeycomb-shaped carrier was measured for exhaust gas purification performance, whereupon CO started to decompose at 280°C or more and decomposed substantially 100% at 290°C. Further, HC started to decompose at 290°C or more and decomposed 100% at 380°C. Furthermore, the catalyst performance relating to NOₓ decomposition is shown in Table 2. In the case of this comparative example, almost no NOₓ decomposition action could be observed.

### (Comparative Example 3)

LaFe_{0.95}Pd_{0.05}O₃ was used to produce a catalyst member. Furthermore, the catalyst performance was evaluated.

LaFe_{0.95}Pd_{0.05}O₃ powder was produced by a method similar to Example 1. Here, as the La-containing material, La₂O₃ was used, while as the Pd-containing material, palladium nitrate was used. Further, the fired matter was pulverized using an automatic mortar. Note that Pd was not carried like in Example 1. This powder was analyzed for crystalline structure by the powder X-ray diffraction method, whereupon only a clear diffraction pattern showing a cubic perovskite structure was obtained. The obtained catalyst was measured for specific surface area, whereupon it was 2.9 m²/g. Further, this catalyst powder had an average particle size of 0.8 µm.

This catalyst powder was used by a method similar to Example 1 to obtain a stainless steel honeycomb-shaped carrier on which a catalyst is carried. Note that the amount of Pd fixed on the honeycomb-shaped carrier was 0.86 g/liter-carrier.

The above catalyst-carrying stainless steel honeycomb-shaped carrier was measured for catalyst performance, whereupon CO started to decompose at 260°C or more and decomposed 100% at a temperature of 370°C. Further, HC started to decompose at 300°C or more and decomposed 100% at a temperature of 480°C. Furthermore, the catalyst performance relating to the NOₓ decomposition and heat resistance was shown in Table 2. In the case of this comparative example, the NOₓ purification rate failed to reach 90% even if raising the temperature.

### (Comparative Example 4)

A perovskite type oxide having a composition of SrFe_{0.98}Nb_{0.02}O_{3-δ} was made to carry Ag to produce a catalyst. This was used to produce a catalyst member. Furthermore, the catalyst performance was evaluated.

SrFe_{0.98}Nb_{0.02}O_{3-δ} was produced by a method similar to Example 1. The obtained oxide was analyzed for crystalline structure by the powder X-ray diffraction method. The strength of the main peak of the diffraction pattern showing a cubic perovskite structure was less than 50% of the strength of peaks derived from other structures.

Next, the above SrFe_{0.98}Nb_{0.02}O_{3-δ} was made to carry Ag on the same way as in Example 1 to obtain an SrFe_{0.98}Nb_{0.02}O_{3-δ} catalyst powder with an Ag carrying rate of 0.6 mass%. The obtained catalyst was measured for specific surface area, whereupon it was 3.5 m²/g. Further, this catalyst powder had an average particle size of 1.1 µm.

This catalyst powder was used by a method similar to Example 1 to obtain a stainless steel honeycomb-shaped carrier on which a catalyst is carried. Note that the amount of Ag fixed on the honeycomb-shaped carrier was 0.77 g/liter-carrier.

The above catalyst-carrying stainless steel honeycomb-shaped carrier was measured for exhaust gas purification performance, whereupon both CO and HC did not decompose much at 250°C or more, but the conversion rate was about 50% even at the maximum. Further, almost no NOₓ decomposition activity could be recognized.

### (Comparative Example 5)

SrCo_{0.9}Nb_{0.09}Pd_{0.01}O_{3-δ} was used to produce a catalyst member. Furthermore, the catalyst performance was evaluated.

A SrCo_{0.9}Nb_{0.09}Pd_{0.01}O_{3-δ} powder was produced by a method similar to Comparative Example 3. This powder were analyzed for crystalline structure by the powder X-ray diffraction method, whereupon only a clear diffraction pattern showing a cubic perovskite structure was obtained. The obtained catalyst was measured for specific surface area, whereupon it was 2.4 m²/g. Further, this catalyst powder had an average particle size of 1.1 µm.

This catalyst powder was used by a method similar to Example 1 to obtain a stainless steel honeycomb-shaped carrier on which a catalyst is carried. Note that the amount of Pd fixed on the honeycomb-shaped carrier was 0.64 g/liter-carrier.

The above catalyst-carrying stainless steel honeycomb-shaped carrier was measured for catalyst performance, whereupon CO started to decompose at 280°C or more and decomposed 100% at a temperature of 380°C. Further, HC started to decompose at 300°C or more and decomposed 100% at a temperature of 350°C. Furthermore, the catalyst performance relating to NOₓ decomposition and heat resistance is shown in Table 2. In the case of the comparative examples, the temperature where the NOₓ decomposition becomes 50% is 443°C or a low activity. Further, even if raising the temperature, the NOₓ purification rate did not reach 90%.

### (Comparative Example 6)

A perovskite type oxide having a composition of Ba_{0.2}Sr_{0.8}Co_{0.9}Nb_{0.1}O_{3-δ} was not made to carry any metal. This was used to produce a catalyst member. Furthermore, the catalyst performance was evaluated.

Ba_{0.2}Sr_{0.8}Co_{0.9}Nb_{0.1}O_{3-δ} powder was produced by the method described in Example 1. This powder was analyzed for crystalline structure by the powder X-ray diffraction method, whereupon only a clear diffraction pattern showing a cubic perovskite structure was obtained. The obtained catalyst was measured for specific surface area, whereupon it was 2.1 m²/g. Further, this catalyst powder had an average particle size of 1.3 µm.

This powder was used by a method similar to Example 1 to obtain a stainless' steel honeycomb-shaped carrier on which Ba_{0.2}Sr_{0.8}Co_{0.9}Nb_{0.1}O_{3-δ} was carried.

The above stainless steel honeycomb-shaped carrier was measured for catalyst performance, whereupon both the CO and HC started to decompose slightly at 400°C or more, but almost no decomposition activity could be observed. Further, NOₓ decomposition activity also could not be observed.

**Table 2**

| | Form of catalyst | Carrier | NOₓ decomposition temperature ^{*1} | | D50 after heat treatment (°C) | Heat resistance |
|---|---|---|---|---|---|---|
| | | | D50 (°C) | D90(°C) | | |
| Example 1 | Catalyst powder Catalyst particles | None | 213 | 233 | 220 | ○ |
| | | | 210 | 231 | 214 | ○ |
| | Catalyst powder | Ceramic particles | 215 | 234 | 218 | ○ |
| | Catalyst powder | Stainless steel honeycomb | 227 | 247 | 229 | ○ |
| Example 2 | Catalyst powder | Stainless steel honeycomb | 247 | 282 | 251 | ○ |
| Example 3 | Catalyst powder | Stainless steel honeycomb | 214 | 233 | 220 | ○ |
| Example 4 | Catalyst powder | Stainless steel honeycomb | 210 | 239 | 223 | ○ |
| Example 5 | Catalyst powder | Stainless steel honeycomb | 230 | 245 | 231 | ○ |
| Example 6 | Catalyst powder | Stainless steel honeycomb | 225 | 240 | 229 | ○ |
| Example 7 | Catalyst powder | Stainless steel honeycomb | 211 | 235 | 220 | ○ |
| Example 8 | Catalyst powder | Stainless steel honeycomb | 242 | 282 | 242 | ○ |
| Example 9 | Catalyst power | Stainless steel honeycomb | 246 | 288 | 248 | ○ |
| Example 10 | Catalyst powder | Stainless steel honeycomb | 224 | 237 | 228 | ○ |
| Example 11 | Catalyst powder | Stainless steel honeycomb | 225 | 245 | 230 | ○ |
| Example 12 | Catalyst powder | Stainless steel honeycomb | 250 | 290 | 255 | ○ |
| Example 13 | Catalyst powder | Stainless steel honeycomb | 226 | 253 | 236 | ○ |
| Comparative Example 1 | Catalyst powder | Stainless steel honeycomb | 215 | 270 | 285 | × |
| Comparative Example 2 | Catalyst powder | Stainless steel honeycomb | - | - | Not evaluated | Not evaluated |
| Comparative Example 3 | Catalyst powder | Stainless steel honeycomb | 321 | - | 361 | ○ |
| Comparative Example 4 | Catalyst powder | Stainless steel honeycomb | - | - | Not evaluated | Not evaluated |
| Comparative Example 5 | Catalyst powder | Stainless steel honeycomb | 443 | - | 450 | ○ |
| Comparative Example 6 | Catalyst powder | Stainless steel honeycomb | - | - | Not evaluated | Not evaluated |

| | | | | | | |
|---|---|---|---|---|---|---|
| *Note 1: In the "NOₓ decomposition temperature", "D50" is the temperature where 50% of the NOₓ decomposes and D90 is the temperature where 90% of the NOₓ decomposes, that is, the purification rate 50% temperature and 90% temperature. Further, "-" shows that the NOₓ purification rate does not reach 50% to 90%. | | | | | | |

From the above results of the examples and comparative examples, the examples of the present invention are all superior in decomposition of CO, HC, and NOₓ gases. In the evaluation of the heat resistance as well, all were superior in heat resistance.

As opposed to this, Comparative Examples 1 and 2 are catalysts comprised of γ-alumina not having perovskite structure crystals but carrying Pd and Pt respectively. In Comparative Example 1, the heat resistance is insufficient, while in Comparative Example 2, the NOₓ decomposition activity is insufficient. Further, Comparative Example 3 is a perovskite type oxide not satisfying the requirement of the present invention, that is, the requirement of A_{α}B₁₋ₓB'ₓO_{3-δ}, and the case of not carrying Pd, but use of LaFe_{0.95}Pd_{0.05}O₃ in the crystal. In addition to the low NOₓ decomposition activity, the CO and HC decomposition temperatures are high. There are clear problems in characteristics. Furthermore, Comparative Example 4 is an example of a composite oxide not having a perovskite structure, that is, Sr_{0.9}Fe_{0.98}Nb_{0.02}O_{3-δ}. All of CO, HC, and NOₓ are low in decomposition ability. The difference from the superior catalyst performance of the present invention is clear. Furthermore, Comparative Example 5 is an example of SrCo_{0.9}Nb_{0.09}Pd_{0.01}O_{3-δ} not carrying Pd, but including it in the crystal, but satisfying the other constituent requirements. There are the problems that the NOₓ decomposition activity is low and D90 cannot be obtained. Further, Comparative Example 6 is an example of a composite oxide where Pd, Pt, or another metal of the requirements of the present invention is not carried. Almost no activity as a catalyst was obtained.

## Claims

1. An exhaust gas purification catalyst **characterized by** comprising a composite oxide having a substantially perovskite type crystalline structure and expressed by the following formula <1> on which one or more elements selected from at least Pt, Pd, and Rh are carried:
A_{α}B₁₋ₓB'ₓO_{3-δ} <1>
(where, A indicates one element or a combination of two elements selected substantially from Ba and Sr, B indicates one element or a combination of two elements selected substantially from Fe and Co, B' indicates one element or a combination of two or more elements selected substantially from Nb, Ta, and Ti, α is 0.95 to 1.05, x is 0.05 to 0.3, and δ is a value determined so as to satisfy charge neutral conditions).

2. An exhaust gas purification catalyst as set forth in claim 1, wherein said composite oxide has a specific surface area of less than 10 m²/g.

3. An exhaust gas purification catalyst member as set forth in claim 1 or 2, further including a binder.

4. An exhaust gas purification catalyst as set forth in claim 3, wherein said binder is one or both of an oxide or hydroxide at which no platinum group elements are carried.

5. An exhaust gas purification catalyst member comprising a substrate carrying an exhaust gas purification catalyst as set forth in any one of claims 1 to 4.

6. An exhaust gas purification catalyst member as set forth in claim 5, wherein said substrate is a ceramic or metal carrier.

7. An exhaust gas purification catalyst member as set forth in claim 6, wherein said ceramic or metal carrier has a honeycomb shape.
